# EUROPEAN PATENT SPECIFICATION

(11) **EP 1 881 388 B1**
(45) Date of publication and mention of the grant of the patent: **20.11.2013**
(21) Application number: 06425474.1
(22) Date of filing: 07.07.2006
(51) Int. Cl.: G05B 23/02

(54) **Industrial plant security apparatus and monitoring method of security of an industrial plant**
Sicherheitsgerät für eine Industrieanlage und Sicherheitsüberwachungsverfahren einer Industrieanlage
Appareil de sécurité d'une installation industrielle et procédé de surveillance de la sécuité d'une installation industrielle.

(43) Date of publication of application: 23.01.2008
(73) Proprietor: ANSALDO ENERGIA S.P.A., 16152 Genova (IT)
(72) Inventor: Falavigna, Loris, 16143 Genova (IT); Bima, Carlo, 16157 Genova (IT)
(74) Representative: Cerbaro, Elena

(56) References cited:
- EP-A- 1 621 944
- DE-A1- 10 123 170
- US-A1- 2003 014 779
- US-A1- 2004 088 066
- US-A1- 2006 059 557

## Description

The present invention relates to an industrial plant security apparatus and to a monitoring method of security of an industrial plant.

As is known, security is a key factor in industrial plant management, under many aspects. In order to ensure the integrity, operativeness and availability of structures and machinery, as well as the integrity and confidentiality of information, industrial plants are normally provided with various security apparatuses, each dedicated to supervising a specific area.

Firstly, apparatus which supervise the correct operation of plants and indicate failure conditions or exceeding of security thresholds by certain critical parameters are known.

Beside these, the known security apparatuses envisage the use of appropriate means to provide protection against intrusions and unauthorised access, particularly to sensitive areas of the plant.

For example, in many cases video surveillance and video recording devices, personal identification devices and other means are envisaged for preventing the access of personnel and outsiders (guests, suppliers) to zones not falling within their competence. Normally, the use of anti-intrusion devices is entrusted to surveillance personnel.

A third category of security apparatuses relates to protection and safeguarding of information, particularly of restricted information. In this case, devices and identification methods allowing access to information only following an authentication procedure are envisaged. Also once this procedure is performed, access is however restricted to a subset of the available data according to the user's qualification. Furthermore, plants which allow to indicate and block intrusion attempts from the outside are used.

The first category of apparatuses has the purpose of minimising the possibility of creating injury and/or damage to personnel and/or to the plant apparatuses, while the second and the third category of apparatuses ensure above all plant running continuity.

The known security apparatuses, however, are in practice isolated one with respect to the other and allow only a partial vision of the security conditions of the plant.

EP-A-1 621 944 discloses an industrial automation system that comprises a security access device, an industrial automation device, a user interface, and a security interface. The user interface enables a user to access data stored inside the industrial automation device. The security interface receives information from the access device and, based on the information received from the access device, provides authorization for the user to access the data stored inside the industrial automation device using the user interface.

It is therefore the object of the present invention to provide an industrial plant security apparatus and a monitoring method of security of an industrial plant which allow to overcome the described limitations. according to the present invention an industrial plant security apparatus and a monitoring method of security of an industrial plant are provided, as claimed in claims 1 and 14, respectively.

The present invention will now be described with reference to the accompanying drawings illustrating a non-limitative embodiment, in which:
- figure 1 is a simplified block diagram of an industrial plant security apparatus according to the present invention;
- figure 2 is a more detailed block diagram of a first part of the plant in figure 1;
- figure 3 is a more detailed block diagram of a second part of the plant in figure 1;
- figure 4 is a more detailed block diagram of a third part of the plant in figure 1;
- figure 5 is a more detailed block diagram of a fourth part of the plant in figure 1.

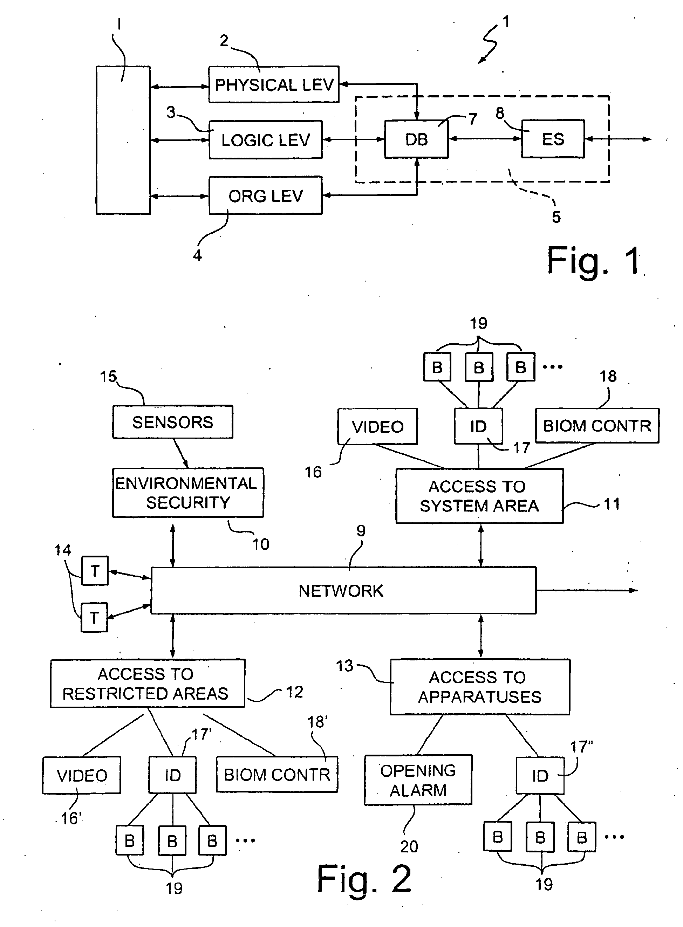

With reference to figure 1, a security apparatus of an industrial plant I is indicated by number 1. The industrial plant I may be of any type, such as, in particular, an electric power generating plant, a raw material processing plant, a commodity production plant, a chemical plant, etc. Apparatus 1 comprises a physical security subapparatus 2, a logic security subapparatus 3, an organisational security subapparatus 4 and an event correlation unit 5. In turn, event correlation unit 5 comprises a database 7 and an expert system 8 which operates on database 7.

Physical security subapparatus 2 and logic security subapparatus 3 are provided with tools configured to monitor a physical security domain and a logic security domain, respectively, as explained below, and interact with database 7 to record significant events, related to a part of plant I. Hereinafter, the expression "physical security domain" indicates in general everything pertinent to the physical integrity of personnel, structures and apparatuses in plant I, in particular:
operativeness of plant structures;
concentrations of potentially harmful substances for plant operators and the surrounding environment;
conditions of possible danger for plant operators;
unauthorised access attempts to areas of the plant;
unauthorised attempts to use tools present in the plant.

Similarly, the expression "logic security domain" indicates in general everything pertinent to the logic integrity of data and information used in plant I, in particular:
operativeness of information plants;
updating of data and configuration backup copies;
unauthorised attempts to access restricted information.

Furthermore, the "significant events" detected and recorded by physical security subapparatus 2 and by logic security subapparatus 3 are all the events which do not comply to predetermined physical and logic security criteria, respectively, as will be explained below.

Physical security subapparatus 2, on one hand, checks that a plurality of environmental and operative parameters remain within predetermined limits and, on the other hand, detects access to areas, rooms and structures by unauthorised personnel. Logic security subapparatus 3 organises access to information according to areas of competence and hierarchic levels, detecting unauthorised access attempts. Furthermore, logic security subapparatus 3 updates backup copies of significant information present in plant I and, in the event of failures, restores the configuration of the concerned units.

Organisational security subapparatus 4 allows to manage information related to the organisational set-up of plant I, such as, for example, defining and updating tasks, hierarchic collocations and authorisations related to access and use of the structures of plant I and the information herein contained. Furthermore, organisational security subapparatus 4 allows to define and update operativeness tests and maintenance procedures for the resources available in plant I. All information introduced in apparatus 1 through organisational security subapparatus 4 constitute significant events which are recorded in database 7 of event correlation unit 5. Similarly, detected violations of areas of competence and procedures are significant events, and are therefore stored in database 7.

Database 7 therefore contains a track of significant events related to all monitored security domains and information related to the plant parts concerned by an event, related to any level of monitored security.

Expert system 8 uses database 7 as a known fact base and, by applying a set of predetermined rules, diagnoses an overall security level SL of the plant. In particular, diagnosis envisages that the level of overall security is demoted to a greater extent if reciprocally correlated significant events are detected (e.g. several unauthorised access attempts made essentially at the same time on the same information domain; the violation of a restricted access area by an unauthorised person, identified as having specific skills, and the simultaneous violation of a restricted information domain connected to tools present in the violated area).

Therefore, in practice, event correlation unit 5 allows to integrate the information made available by the various subapparatuses, to offer an objective and accurate assessment of the overall security level SL of plant I.

As shown more in detail in figure 2, in the embodiment herein described, physical security subapparatus 2 comprises an environmental security branch 10, a plant monitoring branch 11, a restricted areas monitoring branch 12 and an apparatus monitoring branch 13, connected together by a dedicated network 9 and superintended by a plurality of operator terminals 14.

Environmental security branch 10 is provided with a plurality of environmental sensors 15 to detect respective parameters, indicating the environmental conditions within plant I. For example, environmental sensors 15 comprise sensors of concentration of predetermined substances in exhaust air and water; temperature sensors; environmental noise level detectors; environmental radioactivity level detectors, seismic detectors. Environmental security branch 10 coordinates the measurments made by sensors 15 and compares the read data against predetermined security ranges. If one or more detected parameters is/are out of the security range, environmental security branch 10 stores the event in database 7.

In the embodiment described herein, plant monitoring branch 11 comprises video surveillance devices 16 of perimeters and access gates to plant I, personnel identification devices 17 and biometric control devices 18. Personnel identification devices 17 are configured to read identification badges 19 given to personnel and guests. Preferably, identification badges 19 are of the RFID ("Radio-Frequency IDentification") or transponder type and are provided with non-volatile magnetic and/or electronic memory, and possibly processing capability. Furthermore, preferably, communication between personnel identification devices 17 and identification badges 19 may be two-way. Alternatively, electronic identification smart cards or magnetic band cards 19 may be used. Biometric control devices 18 allow recognition on the basis of physical identification elements, such as, for example, fingerprint or iris control. Plant monitoring branch 11 enables access only after an identification procedure and, in the case of unauthorised access, reacts by recording a corresponding event in database 7.

Restricted areas monitoring branch 12 comprises further video surveillance devices 16' of perimeter and access gates to plant I, personnel identification devices 17' and biometric control devices 18', essentially of the type described above, arranged to protect the respective sensitive limited access areas. In particular, personnel identification devices 17' are configured to interact with the same identification badges 19.

Apparatus monitoring branch 13 is mainly intended to monitor accesses to apparatuses, such as for example control panels and processing stations, and in the embodiment illustrated here, it comprises alarm devices 20, which may be activated by the unauthorised opening of cabinets and control panels, and further personnel identification devices 17", also interacting with identification badges 19.

Unauthorised access attempts to sensitive areas and apparatuses are recorded in database 7.

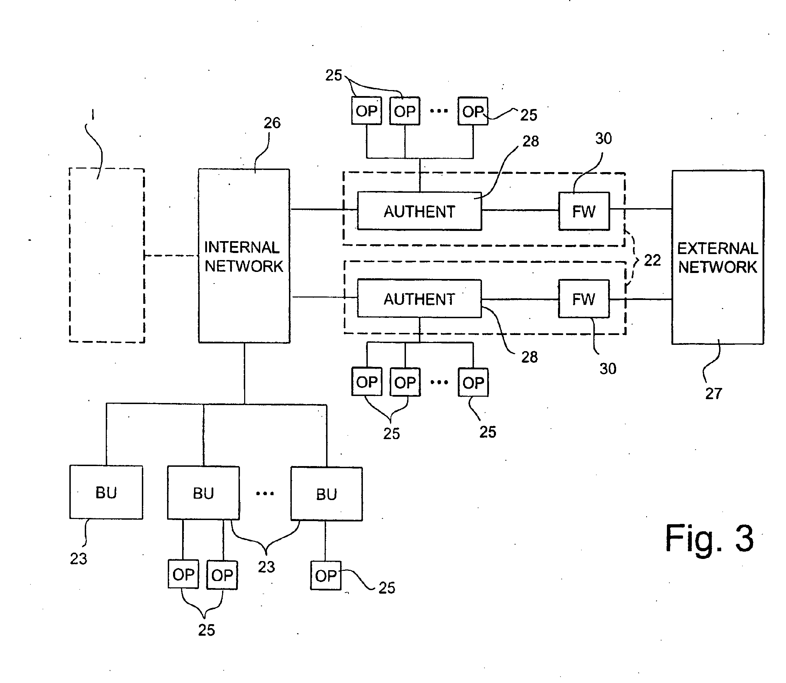

With reference to figure 3, logic security subapparatus 3 comprises protection devices 22 and restore unit 23.

Protection devices 22 are configured to selectively enable access to operating units 25 to predetermined sectors of an internal network 26 and to control traffic from and to an external network 27. The term "operating units" hereinafter comprehensively indicate the terminals, the processing stations, the control panels and in general the information and communication means needed to operate plant I.

By external network, all the communication networks not confined within the plant are indicated, such as, for example, intranet connections, part of the connections known as "Wide Area Networks" and networks external to the plant and to the company (Internet).

More in detail, protection devices 22 comprise at least authentication modules 28, which enable access to operating units 25 only following an identification procedure, and firewalls 30 which selectively limit access from external network 27. Also in this case, unauthorised access attempts to sensitive areas and apparatuses are recorded in database 7.

Restore units 23 are connected to respective operating units 25 either directly or via internal network 26. Restore units 23 are configured to update backup copies of the data stored by the respective operating units 25, as well as a track of their operating status and their configuration. Following a fault or tampering of one of the operating units 25, the corresponding restore unit will reintegrate the configuration and the information related to the damaged operating unit 25. The type of damage occurred, the restore interventions performed and their result are recorded in database 7.

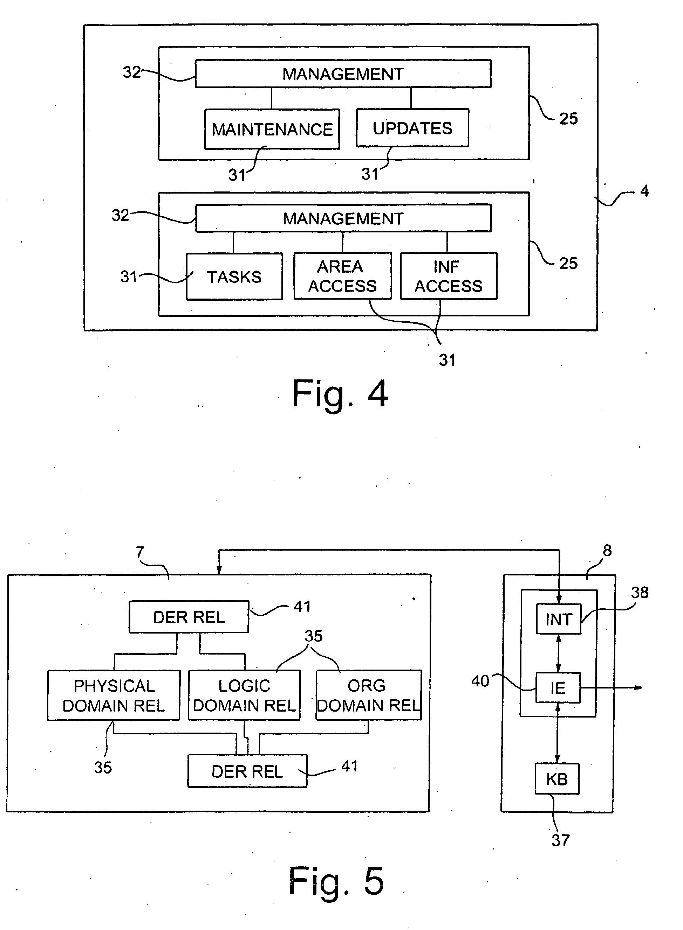

As shown in figure 4, organisational security subapparatus 4 comprises operating units 25 in which a plurality of tables 31 are stored and which are provided with management modules 32, configured to operate on tables 31. Tables 31 contain structured information on the organization of plant I. In particular, such information concern: tasks, responsibility, access rights to areas and information of plant operating personnel; classification of commodities and information pertaining to the plant, with indication of the value and level of confidentiality; maintenance procedures and planning and updating of fixtures available in plant I.

Management modules 32 allow to update and edit tables 31. Furthermore, portions of tables 31, useful for diagnosing of the overall security level SL of plant I, are transferred to database 7.

Figure 5 shows database 7 and expert system 8 more in detail. Database 7, which is structured according to the relational model, comprises relations 35, in the form of tables, related to events and to information recorded by physical security subapparatus 2, by logic security subapparatus 3 and by organisational security subapparatus 4.

Expert system 8 comprises a knowledge base 37 and a shell 38, including an interface 39 and an inferential engine 40. Knowledge base 37 contains a plurality of production rules, predetermined according to the features of plant I. Interface 39 is configured to query database 7, under the control of inferential engine 40. In particular, inferential engine 40 applies the production rules of knowledge base 37 to identify correlations in information recorded in database 7 and, for this purpose, comprises an interpreter, which selects the rules to be applied to expand knowledge base 37, and a scheduler, which organises the rules to be developed and their execution order (the interpreter and the scheduler, in themselves known, are not shown). Inferential engine 40 uses interface 39 to process relations 35 and to create derived relations 41 and, furthermore, is preferably configured to manage uncertainty and incomplete information.

The production rules are structured so that the diagnosed security level SL is demote to a greater extent if correlations between events recorded in database 7 are found, as mentioned above. Correlated events may be, for example:
several unauthorised accesses to a same restricted area in an interval of time;
several unauthorised accesses to a same restricted area in an interval of time, by the same person;
several unauthorised accesses to a same restricted area in an interval of time, by a same person identified as being provided with specific competences according to the assigned tasks;
repeated violations of restricted information;
repeated violations of restricted information, concomitant with the presence of unauthorised persons in areas where the terminals from where the violations were made are situated;
repeated access attempts by external information systems;
repeated procedure violations;
repeated exceeding of alarm levels and missed maintenance in a part of the plant.

The described security apparatus 1 allows to advantageously organise and systematically exploit the security related information in plant I. The overall security level SL is assessed organically and objectively, in particular thanks to the search for correlated events referable to the physical security domain (physical monitoring subapparatus 2) and to the logic security domain (logic monitoring subapparatus 3) . Indeed, information concerning the organisational domain, which are also of great importance, allow to fine-tune risk assessment related to occurred events (e.g. information related to competences and tasks of personnel are used to assess the severity of attempts to access restricted areas and information) or to indicate situations of potential danger on the medium-to-long term (e.g. missed scheduled maintenance intervention). The correlation of information pertaining to the physical and logic domains, instead, allows to identify current risk situations, which require immediate action (e.g. the presence of personnel in an area in which an anomalous concentration of a hazardous substance is found or simultaneous violations of restricted areas and information).

The information recorded in database 7 and organised by expert system 8 can also provide elements for timely assessing security restoring interventions. The integrity of the plant and confidentiality of data and information is thus guaranteed with higher efficiency with respect to conventional apparatuses, in which the monitoring of different domains is entrusted to plants which do not interact.

It is finally apparent that changes and variations can be made to the apparatus and method described and illustrated without departing from the scope of protection of the accompanying claims.

In particular, it is clear that the structure of the monitoring subapparatuses, in particular the physical and the logic subapparatuses, may vary with respect to that described. For example, the physical monitoring subapparatus may envisage the use of different personnel identification and access control devices, as well as the use of sensors of various type, adapted to detect human presence and preferably associated to means capable of processing authorisation level related information. Similarly, the logic monitoring subapparatus may comprise protection devices other than those described above, but however capable of detecting and contrasting attempts to access restricted information, from the outside and from the inside.

Database 7 does not necessarily need to be of the relational type, although the use of such model is particularly advantageous in terms of flexibility and information management.

## Claims

1. Security apparatus of an industrial plant (1), comprising:
the a first monitoring subapparatus (2) for monitoring the integrity of a physical security domain of the plant (1) and
for detecting events which do not comply with predetermined physical security parameters of the plant (1) ; and
a second monitoring subapparatus (3) for monitoring the integrity of a logic security domain of the plant (1) and for
detecting events which do not comply with predetermined logic security parameters of the plant (1);
**characterised in that** it comprises an event correlation unit (5) configured to automatically identify correlations between events detected by the first subapparatus (2) and by the second subapparatus (3) and to determine a security level (SL) of the plant according to the identified correlations.

2. An apparatus according to claim 1, comprising a third subapparatus (4) for managing information related to the organisational set-up of the plant (I).

3. An apparatus according to claim 2, wherein the event correlation unit (5) is configured to automatically identify correlations between events detected by the first subapparatus (2), by the second subapparatus (3) and by the third subapparatus (4) and to determine the security level (SL) of the plant according to the identified correlations.

4. An apparatus according to any of the preceding claims, wherein the event correlation unit (5) comprises a database (7) and at least the first subapparatus (2) and the second subapparatus (3) are configured to record the events detected in the database (7).

5. An apparatus according to claim 4 depending from claim 3, wherein the third subapparatus (4) is configured to record information in the database (7).

6. An apparatus according to claim 4 or 5, wherein the database (7) is of the relational type.

7. An apparatus according to any of the claims 4-6, wherein the event correlation unit (5) comprises an expert system (8) configured to operate on data contained in the database (7).

8. An apparatus according to claim 7, wherein the expert system (8) comprises a knowledge base (37), an inferential engine (40) and an interface (39) controlled by inferential engine (40) to query the database (7).

9. An apparatus according to any of the preceding claims, wherein the first subapparatus (2) comprises video surveillance devices (16).

10. An apparatus according to any of the preceding claims, wherein the first subapparatus (2) comprises personnel identification devices (17).

11. An apparatus according to any of the preceding claims, wherein the first subapparatus (2) comprises biometric control devices (18).

12. An apparatus according to any one of the preceding claims, wherein the second subapparatus (3) comprises protection devices (22) configured to selectively enable access of operative units (25) of the plant (I) to predetermined sectors of an internal network (26) of the plant (I) and to monitor traffic from and to an external network (27) of the plant (I).

13. An apparatus according to any one of the preceding claims, wherein the second subapparatus (3) comprises restore units (23) configured to update backup
copies of data stored in respective operating units (25) of the plant (I).

14. A security monitoring method of an industrial plant (1), comprising the steps of:
supervising the integrity of a physical security domain of the plant (1);
detecting events non-complying to predetermined physical security criteria of the plant (1);
supervising the integrity of a logic security domain of the plant (1); and
detecting events non-complying to predetermined logic security criteria of the plant (1);
**characterised in that** it comprises the steps of:
automatically identifying correlations between events detected by the first subapparatus (2) and by the second subapparatus (3); and
determining a security level (SL) of the plant according to the identified correlations.

## Patentansprüche

1. Sicherheitsvorrichtung einer Industrieanlage (1), die umfasst:
eine erste Überwachungsuntervorrichtung (2) zum Überwachen der Unversehrtheit eines physikalischen Sicherheitsbereichs der Anlage (1) und zum Detektieren von Ereignissen, die nicht vorgegebenen physikalischen Sicherheitsparametern der Anlage (1) entsprechen; und
eine zweite Überwachungsuntervorrichtung (3) zum Überwachen der Unversehrtheit eines logischen Sicherheitsbereichs der Anlage (1) und zum Detektieren von Ereignissen, die nicht vorgegebenen logischen Sicherheitsparametern der Anlage (1) entsprechen;
**dadurch gekennzeichnet, dass** sie eine Ereigniskorrelationseinheit (5) umfasst, die konfiguriert ist, automatisch Korrelationen zwischen den durch die erste Untervorrichtung (2) und den durch die zweite Untervorrichtung (3) detektierten Ereignissen zu identifizieren und ein Sicherheitsniveau (SL) der Anlage gemäß den identifizierten Korrelationen zu bestimmen.

2. Vorrichtung nach Anspruch 1, die eine dritte Untervorrichtung (4) zum Managen von Informationen bezüglich der Organisationseinrichtung der Anlage (I) umfasst.

3. Vorrichtung nach Anspruch 2, wobei die Ereigniskorrelationseinheit (5) konfiguriert ist, automatisch Korrelationen zwischen den durch die erste Untervorrichtung (2), den durch die zweite Untervorrichtung (3) und den durch die dritte Untervorrichtung (4) detektierten Ereignissen zu identifizieren und das Sicherheitsniveau (SL) der Anlage gemäß den identifizierten Korrelationen zu bestimmen.

4. Vorrichtung nach einem der vorhergehenden Ansprüche, wobei die Ereigniskorrelationseinheit (5) eine Datenbank (7) umfasst und zumindest die erste Untervorrichtung (2) und die zweite Untervorrichtung (3) konfiguriert sind, die detektierten Ereignisse in der Datenbank (7) aufzuzeichnen.

5. Vorrichtung nach Anspruch 4, wenn abhängig von Anspruch 3, wobei die dritte Untervorrichtung (4) konfiguriert ist, Informationen in der Datenbank (7) aufzuzeichnen.

6. Vorrichtung nach Anspruch 4 oder 5, wobei die Datenbank (7) vom relationalen Typ ist.

7. Vorrichtung nach einem der Ansprüche 4-6, wobei die Ereigniskorrelativnseinheit (5) ein Expertensystem (8) umfasst, das konfiguriert ist, auf die in der Datenbank (7) enthaltenen Daten einzuwirken.

8. Vorrichtung nach Anspruch 7, wobei das Expertensystem (8) eine Wissensbasis (37), eine schlussfolgernde Maschine (40) und eine Schnittstelle (39), die durch die schlussfolgernde Maschine (40) gesteuert wird, die Datenbank (7) abzufragen, umfasst.

9. Vorrichtung nach einem der vorhergehenden Ansprüche, wobei die erste Untervorrichtung (2) Videoüberwachungsvorrichtungen (16) umfasst.

10. Vorrichtung nach einem der vorhergehenden Ansprüche, wobei die erste Untervorrichtung (2) Personalidentifikationsvorrichtungen (17) umfasst.

11. Vorrichtung nach einem der vorhergehenden Ansprüche, wobei die erste Untervorrichtung (2) biometrische Kontrolleinrichtungen (18) umfasst.

12. Vorrichtung nach einem der vorhergehenden Ansprüche, wobei die zweite Untervorrichtung (3) Schutzvorrichtungen (22) umfasst, die konfiguriert sind, wahlweise den Zugriff von Betriebseinheiten (25) der Anlage (I) auf vorgegebene Sektoren eines internen Netzes (26) der Anlage (I) zu ermöglichen und den Verkehr von und zu einem externen Netz (27) der Anlage (I) zu überwachen.

13. Vorrichtung nach einem der vorhergehenden Ansprüche, wobei die zweite Untervorrichtung (3) Wiederherstellungseinheiten (23) umfasst, die konfiguriert sind, Sicherheitskopien der in jeweiligen Betriebseinheiten (25) der Anlage (I) gespeicherten Daten zu aktualisieren.

14. Sicherheitsüberwachungsverfahren einer Industrieanlage (1), das die Schritte umfasst:
Überwachen der Unversehrtheit eines physikalischen Sicherheitsbereichs der Anlage (1);
Detektieren von Ereignissen, die nicht vorgegebenen physikalischen Sicherheitskriterien der Anlage (1) entsprechen;
Überwachen der Unversehrtheit eines logischen Sicherheitsbereichs der Anlage (1); und
Detektieren von Ereignissen, die nicht vorgegebenen logischen Sicherheitskriterien der Anlage (1) entsprechen;
**dadurch gekennzeichnet, dass** es die Schritte umfasst:
automatisches Identifizieren von Korrelationen zwischen den durch die erste Untervorrichtung (2) und den durch die zweite Untervorrichtung (3) detektierten Ereignissen; und
Bestimmen eines Sicherheitsniveaus (SL) der Anlage gemäß den identifizierten Korrelationen.

## Revendications

1. Appareil de sécurité d'une installation industrielle (1), comprenant :
un premier sous-appareil de surveillance (2) pour surveiller l'intégrité d'un domaine de sécurité physique de l'installation (1) et pour détecter des événements qui ne sont pas conformes aux paramètres de sécurité physique prédéterminés de l'installation (1) ;
un deuxième sous-appareil de surveillance (3) pour surveiller l'intégrité d'un domaine de sécurité logique de l'installation (1) et pour détecter des événements qui ne sont pas conformes aux paramètres de sécurité logique prédéterminés de l'installation (1) ;
**caractérisé en ce qu'**il comprend une unité de corrélation d'événements (5) configurée pour identifier automatiquement des corrélations entre des événements détectés par le premier sous-appareil (2) et par le deuxième sous-appareil (3) et pour déterminer un niveau de sécurité (SL) de l'installation selon les corrélations identifiées.

2. Appareil selon la revendication 1, comprenant un troisième sous-appareil (4) pour gérer des informations relatives à la structure organisationnelle de l'installation (I).

3. Appareil selon la revendication 2, dans lequel l'unité de corrélation d'événements (5) est configurée pour identifier automatiquement des corrélations entre des événements détectés par le premier sous-appareil (2), par le deuxième sous-appareil (3) et par le troisième sous-appareil (4) et pour déterminer le niveau de sécurité (SL) de l'installation selon les corrélations identifiées.

4. Appareil selon l'une des revendications précédentes, dans lequel l'unité de corrélation d'événements (5) comprend une base de données (7) et au moins le premier sous-appareil (2) et le deuxième sous-appareil (3) sont configurés pour enregistrer les événements détectés dans la base de données (7).

5. Appareil selon la revendication 4 lorsqu'elle dépend de la revendication 3, dans lequel le troisième sous-appareil (4) est configuré pour enregistrer des informations dans la base de données (7).

6. Appareil selon la revendication 4 ou 5, dans lequel la base de données (7) est du type relationnel.

7. Appareil selon l'une des revendications 4-6, dans lequel l'unité de corrélation d'événements (5) comprend un système expert (8) configuré pour opérer sur des données présentes dans la base de données (7).

8. Appareil selon la revendication 7, dans lequel le système expert (8) comprend une base de connaissances (37), un moteur d'inférence (40) et une interface (39) commandée par le moteur d'inférence (40) pour interroger la base de données (7).

9. Appareil selon l'une des revendications précédentes, dans lequel le premier sous-appareil (2) comprend des dispositifs de surveillance vidéo (16).

10. Appareil selon l'une des revendications précédentes, dans lequel le premier sous-appareil (2) comprend des dispositifs d'identification personnelle (17).

11. Appareil selon l'une des revendications précédentes, dans lequel le premier sous-appareil (2) comprend des dispositifs de commande biométriques (18).

12. Appareil selon l'une quelconque des revendications précédentes, dans lequel le deuxième sous-appareil (3) comprend des dispositifs de protection (22) configurés pour permettre de manière sélective l'accès des unités opérationnelles (25) de l'installation (I) à des secteurs prédéterminés d'un réseau interne (26) de l'installation (I) et pour surveiller le trafic depuis et vers un réseau externe (27) de l'installation (I).

13. Appareil selon l'une quelconque des revendications précédentes, dans lequel le deuxième sous-appareil (3) comprend des unités de rétablissement (23) configurées pour mettre à jour des copies de sauvegarde de données stockées dans des unités opérationnelles respectives (25) de l'installation (I).

14. Procédé de surveillance de sécurité d'une installation industrielle (1), comprenant les étapes qui consistent à :
vérifier l'intégrité d'un domaine de sécurité physique de l'installation (1) ;
détecter des événements non conformes aux critères de sécurité physique prédéterminés de l'installation (1) ;
vérifier l'intégrité d'un domaine de sécurité logique de l'installation (1) ; et
détecter des événements non conformes aux critères de sécurité logique prédéterminés de l'installation (1) ;
**caractérisé en ce qu'**il comprend les étapes consistant à :
identifier automatiquement des corrélations entre des événements détectés par le premier sous-appareil (2) et par le deuxième sous-appareil (3) ; et
déterminer un niveau de sécurité (SL) de l'installation selon les corrélations identifiées.
